# EUROPEAN PATENT APPLICATION

(11) **EP 1 139 318 A1**
(43) Date of publication of application: **04.10.2001**
(21) Application number: 99944844.2
(22) Date of filing: 27.09.1999
(51) Int. Cl.: G09B 19/06, G09B 5/06, G10L 11/00

(54) **PRONUNCIATION EVALUATION SYSTEM**

(71) Applicant: Kojima Co., Ltd., Utsunoniya-shi, Tochigi 320-8528 (JP)
(72) Inventor: KOJIMA, Akitoshi Kojima Co., Ltd., Utsunomiya-shi, Tochigi 320-8528 (JP)
(74) Representative: Luderschmidt, Schüler & Partner GbR
(86) International application number: JP9905257
(87) International publication number: WO0124139

(57) **Abstract**

A database (16) stores reference voice data for beginner's, intermediate and advance levels for each text of a foreign language textbook, and when any one of texts in the lesson screen displayed on a CRT (26) is selected, the reference voice data corresponding to this text is read out and the model pronunciation is output from a voice synthesis unit (34). The user listens to this, and imitates the pronunciation facing a microphone (20). The computer obtains the voice data through the spectrum analysis of the user voice input from the microphone (20) by the voice recognition unit (22) and determines the user pronunciation level by comparing the same with the reference voice data of the database (16). A predetermined success mark is displayed on the screen, if the user pronunciation is so good that it is communicated exactly to the collocutor, and recognized by the collocutor, and it proceeds to the practice of the following text. If the determination result is bad, the practice is repeated for the same text many times. This allows the user to judge if his/her pronunciation is recognized by a foreigner and improve the foreign language pronunciation learning effect, by repeating this practice.

## Description

### Technical Field

The present invention relates to a pronunciation judgment system using a voice recognition function for language pronunciation practice of foreign language or the like including especially English conversation, and a recording medium for storing a computer program thereof.

### Background Art

Conventionally, a number of language learning systems for practicing English conversation or the like have been developed. A typical system is an interaction with a computer. Here, the computer becomes one speaker, displays the face of a collocutor on the screen, and asks questions to which a user responds. This user response voice is input to the computer and recognized. Then, when it agrees with the correct answer contents, a person representing the collocutor on the screen nods, or other predetermined display is executed, it proceeds to the next question in a way to continue the conversation.

However, this system requires to examine also the content of the response; hence the system is not appropriate for a simple pronunciation repeat practice. In short, when the response content is not correct, the conversation does not continue, in this case, the user can not determine whether the content itself was wrong or his/her pronunciation was wrong. In addition, the user can not concentrate his/her attention to the pronunciation practice, worrying about giving a correct answer. Further, the agreement with the correct answer content is determined by the comparison with a single kind of reference voice data representing the answer content and the determination is fixed; therefore, when the content agrees and only the pronunciation disagrees, the user can not know how wrong was his/her pronunciation and, hence, can not realize to which extent his/her pronunciation is understood by a foreigner. In addition, if the reference voice data level is too high, the user can not pass although he/she tries many times, loosing possibly his/her motivation.

It is an object of the present invention is to provide a pronunciation judgment system allowing to know objectively to what extent one's pronunciation is recognized by the collocutor, and a recording medium for storing a computer program thereof.

Another object of the present invention to provide a pronunciation judgment system allowing to practice the pronunciation effectively through a repeated pronunciation practice of the same text, and display of the degree of similarity to the reference pronunciation, each time, and a recording medium for storing a computer program thereof.

### Disclosure of Invention

The pronunciation judgment system of the present invention comprises a database for storing reference pronunciation data, reference voice playback means for outputting the reference voice based on the reference pronunciation data, similarity determination means for comparing a user pronunciation data input in correspondence to the reference voice and the reference pronunciation data, and means for informing the user of the agreement, if the similarity determination means judges the agreement of both data.

In a preferred embodiment, the database may store a plurality of reference pronunciation data corresponding to the pronunciation fluency level, for the same language. The reference voice playback means may include a user operation member for selecting the level and output the selected level reference voice, until the informing means informs the user the agreement of both data. The database may store reference pronunciation data of a plurality of level for each of a number of sentences, while the reference voice playback means may include a user operation member for selecting sentences and the level and output the selected level reference voice of the selected sentence, until the informing means informs the user the agreement of both data. It may further include means for displaying a sentence corresponding to the reference pronunciation data.

The computer readable recording medium for recording a program to be executed by a computer of the present invention records a computer program for executing by a computer steps of reading out the reference voice data from the database, playing back reference voice based on the read out reference voice data, judging the similarity by comparing the user pronunciation data input in correspondence to the reference voice data and the reference voice data, and informing the user of the agreement of both data if such agreement is determined by the similarity determination step.

In a preferred embodiment, the database may store a plurality of reference pronunciation data corresponding to the pronunciation fluency level, for the same language. The reference voice playback step may output the user selected level reference voice, until the informing step informs the user of the agreement of both data. The database may store reference pronunciation data of a plurality of level for each of a number of sentences, while the reference voice playback step may output the user selected level reference voice of the user selected sentence, until the informing step informs the user of the agreement of both data. The program may execute a step of displaying a sentence corresponding to the reference pronunciation data by the computer.

The present invention allows to judge if one's pronunciation attains the level to be recognized by the collocutor, and improve the language learning (pronunciation learning) efficiency, by repeating this practice.

### Brief Description of Drawings

FIG. 1 is a block diagram showing a configuration of the pronunciation judgment system according to the present invention;
FIG. 2 is a flow chart showing the flow during the pronunciation practice according to the present invention; and
FIG. 3 shows an example of lesson screen.

### Best Mode of Carrying Out the Invention

Now, the embodiment of pronunciation judgment system of the present invention will de described.

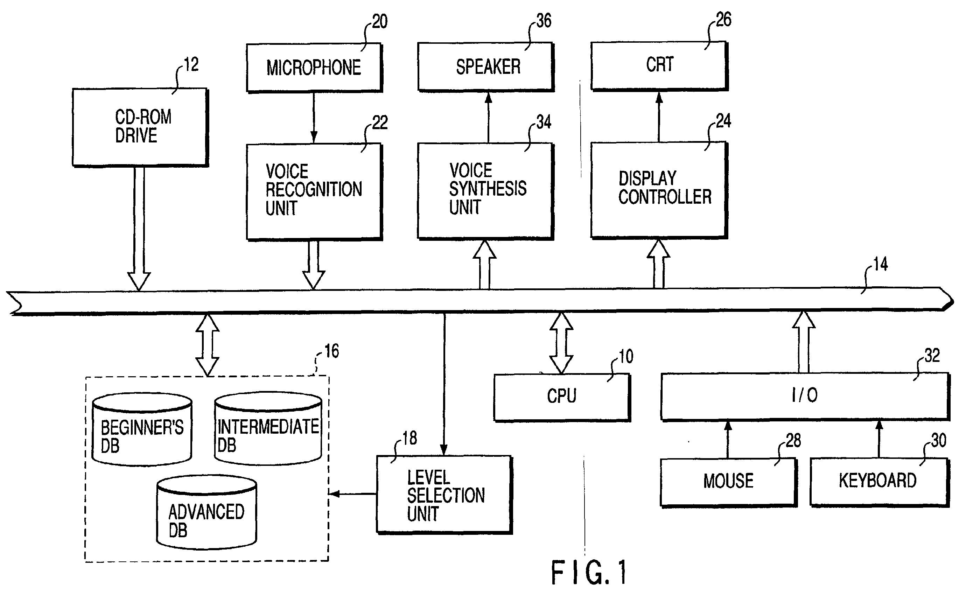

FIG. 1 is a block diagram showing a configuration of the whole system. A CPU 10, a CD-ROM drive 12 are connected to a system bus 14. This system is realized by executing a computer program stored in the CD-ROM drive 12 by the CPU 10. A database 16 for storing reference pronunciation data serving as model of pronunciation practice, for the respective beginner's, intermediate and advanced levels and a level selection unit 18 for selecting the level of the database 16 are also connected to the system bus 14. The database 16 is constructed by collecting pronunciation signal (waveform signal) of a great number of individuals (several hundreds of thousand) and averaging pronunciation data of spectrum analysis thereof. Here, the database 16 is included in the pronunciation practice program, and it may be contained in a CD-ROM and taken in the system, each time. The beginner's level corresponds to the pronunciation of a Japanese teacher of English, the advanced level to the pronunciation of a fluent European and American speaker, and the intermediate level to the pronunciation of a European and American speaker who does not speak so fluently. The database is not necessarily divided into three physical units, but it may only be divided functionally.

A microphone 20 for inputting the voice waveform pronounced by a user is connected to the system bus 14 through a voice recognition unit 22. The voice recognition unit 22 obtains the pronunciation data through spectrum analysis of input voice waveform. This voice recognition unit 22 should perform the same spectrum analysis as used for obtaining the pronunciation data of the database. A CRT 26 is connected to the system bus 14 through a display controller 24, and a mouse 28 and a keyboard 30 are connected through an I/O 32 and, also, a speaker 36 is connected through a voice synthesis unit 34.

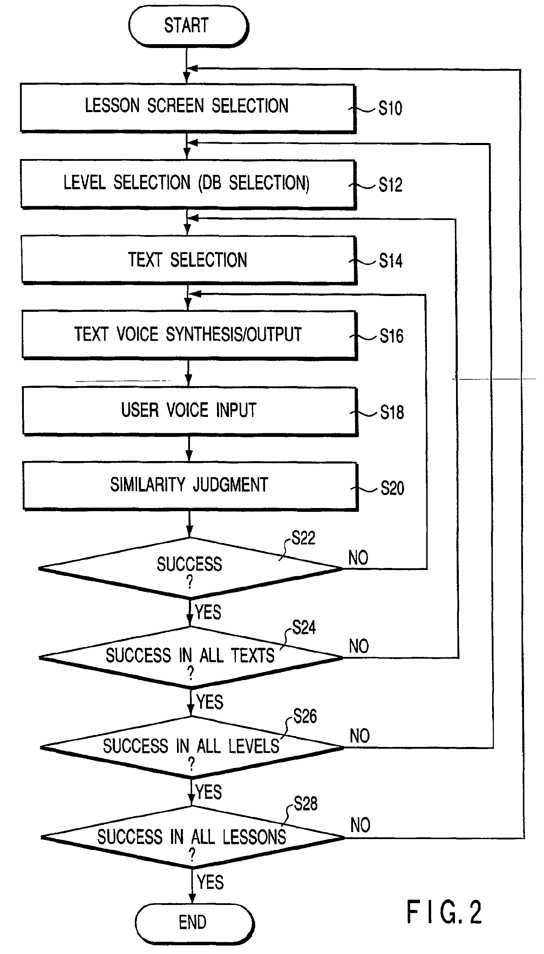

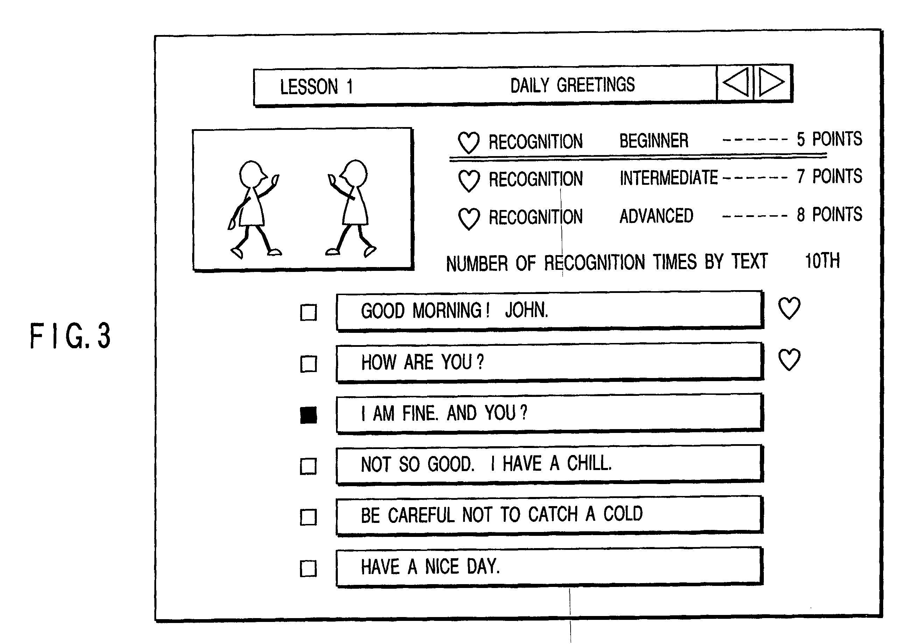

Now, the operation of the present embodiment will be described referring to the flow chart shown in FIG. 2. This flow chart shows the processing flow of computer program performed by the CPU 10 and stored in the CD-ROM 12. Upon starting the operation, a lesson screen shown in FIG. 3 is displayed. This embodiment is supposed to be based on, for example, English textbook for junior high school, and be a pronunciation practice system of texts included in the textbook. The lesson screen comprises a lesson chapter display section 50, an image display section 52 related to the lesson chapter 52, a text display section 54, a pronunciation level display section 56, and a display section 58 showing the number of times of practice per text. The lesson chapter display section 50 displays right and left triangular icons, allowing to select a lesson chapter by operating them with the mouse 28. The text display section 54 shows a plurality of texts, and a square icon showing the text selection state at the left of each text, and a heart mark icon showing a good pronunciation level determination result as the right are displayed. The heart mark icon is a success mark to be displayed a student can pronounce similarly to the model pronunciation (divided into three levels). The level display section 56 displays also the note (out of 10) for the respective level; however, this note is nothing but a standard for indicating the difficulty of respective levels. In the example of FIG. 3, the beginner's level is selected.

In step S10, the lesson chapter is selected. In step S12, the level is selected. The level is selected by selecting any level line with mouse. Here, the beginner's level is selected. In step S14, the text is selected. In the example of FIG. 3, the third "I am fine. And you?" is selected.

In step S16, the beginner's level reference pronunciation data of this selected text is read out from the database 16, the voice is synthesized at the voice synthesis unit 34 and output from the speaker 36 as model pronunciation. The model pronunciation may be output not only once but several times, and the output speed may be varied for several output.

In step S18, the user pronounces imitating this model voice. The user voice waveform is input into the voice recognition unit 22 through the microphone 20. The voice recognition unit 22 obtains the pronunciation data through the spectrum analysis of this voice signal.

In step S20, the user pronunciation data and the reference voice data stored in the database 16 are compared to obtain the similarity degree. The higher this similarity is, the closer the user pronunciation is to the reference voice, showing that the user speaks well, and one's pronunciation has a higher possibility to be communicated exactly to the collocutor and recognized correctly.

In step S22, it is determined whether this similarity is higher than a predetermined similarity, or whether this text pronunciation has obtained the passing mark and succeeded. If the passing mark is not obtained, it goes back to step S16, again, the same text reference voice is output from the speaker 36, and the user repeats the pronunciation practice.

If one text is passed, in step S24, it is determined whether all texts of a chapter are passed or not. If there is any text that is not passed, it goes back to step S14, another text is selected, and the user repeats the pronunciation practice.

If all texts are passed, in step S26, it is determined whether all levels are passed. If there is any level that has not been passed, it goes back to step S12, another level is selected, and the user repeats the pronunciation practice for all texts of the concerned level.

If all levels are passed, in step S28, it is determined whether the other chapters are also passed. If there is any chapter that has not been passed, it goes back to step S10, another chapter is selected, and the user repeats the pronunciation practice for all texts, all levels of the concerned chapter.

As described above, in the present embodiment, the text is displayed and the reference voice is pronounced using a computer, while the student imitates this pronunciation and input from the microphone 20. Then, in the computer, the similarity between the reference voice data and the student input voice data is determined, and if the similarity is lower than a predetermined value, it makes the student repeat the pronunciation practice, and when it is becomes higher than the predetermined value, a success mark is displayed. Thus, the pronunciation practice can be repeated as desired effectively, because the pronunciation practice can be repeated as desired for the same text, and pronunciation level determination result is displayed each time. In addition, the reference voice data is not limited to one kind, but three kinds including the beginner's level pronunciation data which is the pronunciation of a Japanese teacher, the advanced level pronunciation data which is the pronunciation of a particularly fluent native speaker, and the intermediate level pronunciation data which is the pronunciation of a foreign speaker who does not speak so fluently, thereby allowing to improve the pronunciation gradually from the beginner's level to the advanced level through the intermediate level, avoiding a case where the user can not succeed although he/she tries many times because the level is too high, and preventing him/her from losing the motivation.

The present invention in not limited to the embodiment mentioned above, but various modifications can be executed. For example, the essential configuration of the lesson screen has only to have the success mark and the other displays are arbitrary at all. Further, in addition to displaying only the success mark, the similarity to the reference voice may be scored, even in case of failure. Here, the reference pronunciation and the user pronunciation are conducted alternately; however, it is preferable to make the user pronounce at the same time as hearing the reference pronunciation. In the reference voice database, not average data of voice data of number of persons (data after spectrum analysis), but the voice wave form of a particular speaker can be stored as it is. In this case, the voice synthesis unit 34 at the front stage of the speaker 36 is not necessary. In place, it is necessary to submit the voice waveform signal read out from the database to the spectrum analysis by the voice recognition unit 22 as the user input voice signal from the microphone, and to compare with the user input voice data. The object of practice is not limited to English and may include Chinese or the like, and it is not limited to foreign languages, but may include Japanese (National language) or the like. In addition, the corresponding Japanese may be displayed at the same time under the English text display. Further, in place of providing database for respective three levels, but it may be so constructed to use a single database, allowing to change only the level. It will be enough to have the repeated practice effects for the present invention, and it is not always necessary to divide the reference pronunciation into a plurality of levels.

### Industrial Applicability

As mentioned above, the present invention allows to provide a pronunciation judgment system capable of determining whether one's pronunciation is recognized by the collocutor, and a recording medium for storing a computer program thereof. In addition, the present invention can provide a pronunciation judgment system allowing to practice the pronunciation effectively through a repeated pronunciation practice of the same text, and to practice the pronunciation effectively alone until the a predetermined similarity level is obtained by comparing, each time, with the reference voice, determining whether it agrees with the reference and displaying how it resembles to the reference pronunciation, and a recording medium storing the a computer program thereof.

## Claims

1. A pronunciation judgment system comprising:
a database for storing reference pronunciation data;
reference voice playback means for outputting a reference voice based on said reference pronunciation data;
similarity determination means for comparing a user pronunciation data input in correspondence to said reference voice and said reference pronunciation data; and
means for informing a user of a result of determination made by said similarity determination means.

2. The pronunciation judgment system according to claim 1, **characterized in that** said database stores a plurality of reference pronunciation data corresponding to a pronunciation fluency level, for the same language.

3. The pronunciation judgment system according to claim 2, **characterized in that** said reference voice playback means includes a user operative member for selecting a level, and outputs a selected level reference voice, until said similarity determination means detects agreement of both data.

4. The pronunciation judgment system according to claim 1, **characterized in that** said database stores reference pronunciation data of a plurality of level for each of a number of sentences, and said reference voice playback means includes a user operative member for selecting a sentence and a level and outputs a selected level reference voice of a selected sentence, until said similarity determination means detects agreement of both data.

5. The pronunciation judgment system according to claim 1, **characterized by** further comprising means for displaying a sentence corresponding to the reference pronunciation data.

6. The pronunciation judgment system according to claim 1, **characterized in that** said informing means informs of the agreement of both data.

7. A computer readable recording medium for storing a program for causing a computer to execute the steps of:
reading out reference voice data from a database;
playing back a reference voice based on the read out reference voice data;
determining a similarity by comparing user pronunciation data input in correspondence to said reference voice data and said reference voice data; and
informing a user of a result of determination made by said similarity determination step.

8. The recording medium according to claim 7, **characterized in that** said database stores a plurality of reference pronunciation data corresponding to a pronunciation fluency level, for the same language.

9. The recording medium according to claim 7, **characterized in that** said reference voice playback step outputs a user selected level reference voice, until said similarity determination step detects agreement of both data.

10. The recording medium according to claim 7, **characterized in that** said database stores reference pronunciation data of a plurality of levels for each of a number of sentences, and said reference voice playback step outputs a user selected level reference voice of a user selected sentence, until said similarity determination step detects agreement of both data.

11. The recording medium according to claim 7, **characterized in that** said program causes a computer to execute also a step for displaying a sentence corresponding to the reference pronunciation data.

12. The recording medium according to claim 7, **characterized in that** said informing step informs of agreement of both data.
